# EUROPEAN PATENT APPLICATION

(11) **EP 4 733 260 A1**
(43) Date of publication of application: **29.04.2026**
(21) Application number: 24223581.0
(22) Date of filing: 29.12.2024
(51) Int. Cl.: C01G 23/00

(54) **AQUEOUS SOLUTION COMPOSITION FOR SYNTHESIZING TI-BASED PEROVSKITE STRUCTURAL BODY DOPED WITH LA, METHOD FOR SYNTHESIZING THEM, AND SOFC INCLUDING ANODE USING THEM**

(30) Priority: 24.10.2024 KR 20240146892
(71) Applicant: Korea Institute of Energy Research, Daejeon 34129 (KR)
(72) Inventor: Jong-Eun, Hong, 127 Dunsandal-ro, Seo-gu, Daejeon (Dunsan-dong, Rotem Apartment) (KR); Song, Rak-hyun, 210 Yeongdongdae-ro, Gangnam-gu, Seoul, Ssangyong Apartment 6-do (KR); Park, Seok-joo, 83 Wolpyeong-ro, Seo-gu, Daejeon (Wolpyeong-dong, Daewoo Apartme (KR); Lim, Tak-hyoung, 57 Eoun-ro, Yuseong-gu, Daejeon, Hanwha Apartment 105-dong 901-h (KR); Lee, Seung-bok, 127 Dunsandal-ro, Seo-gu, Daejeon, Rotem Apartment 101-dong 502- (KR); Kim, Hye-Sung, 251 Jukdong-ro, Yuseong-gu, Daejeon (Jukdong, Prugio Apartment) (KR); Joh Dong, Woo, 34 Maeumal-ro, Sejong Special Self-Governing City (Gowon-dong, G (KR); Keejung, Kim, 39 Godeungro 10-gil, Seochogu, Seoul 903-ho (KR)
(74) Representative: Sander, Rolf

(57) **Abstract**

An aqueous solution composition for synthesizing a La-doped Ti-based perovskite structural body according to an embodiment of the present invention includes at least one selected from the group consisting of a Ba precursor, a Sr precursor, and a Ca precursor, a La precursor, and a Ti precursor which are dissolved in an aqueous solution, wherein the aqueous solution further includes citric acid.

## Description

### BACKGROUND

The present disclosure relates to an aqueous solution composition for synthesizing a La-doped Ti-based perovskite structural body, a method for synthesizing a La-doped Ti-based perovskite structural body, and an SOFC including an anode formed by infiltration of a La-doped Ti-based perovskite structural body.

Currently, we are on the verge of entering a hydrogen society. A hydrogen society refers to a society in which hydrogen is used as a central energy source and hydrogen is distributed and available in all regions. In order to enter a hydrogen society, it is necessary to establish a stable value chain of the hydrogen industry.

As a method for transporting hydrogen, there is a method for preparing and transporting hydrogen in a gaseous state or a liquid state, and a method for manufacturing and using a hydrogen carrier which is a compound containing hydrogen.

Ammonia (NH₃) is one of hydrogen carriers, and contains 17.6% of hydrogen based on the weight, thereby having a high hydrogen density, and is advantageous in that existing infrastructure can be utilized for production, storage, and transportation of ammonia.

On the other hand, a solid oxide fuel cell (SOFC) can use hydrogen, natural gas, synthetic gas, and the like as fuel, and can also use ammonia directly as fuel for power generation. If ammonia is directly used as fuel, there are advantages in that there is no carbon emission, and there is no need for an apparatus for preprocessing the fuel.

Accordingly, interest in the development of a solid oxide fuel cell for direct ammonia fuel (Direct Ammonia SOFC) is rapidly increasing, and technology development therefor is actively underway.

However, Ni-YSZ, a commercially available SOFC fuel electrode material, is reported to have relatively low performance during DA-SOFC operation, and has a problem of low durability due to microstructure deterioration caused by grain growth or nitrification of a Ni catalyst sample during direct ammonia fuel operation.

Therefore, in order to commercialize a solid oxide fuel cell for direct ammonia fuel, it is necessary to improve ammonia decomposition performance.

### SUMMARY

An object of the present invention is to provide an aqueous solution composition for synthesizing a La-doped Ti-based perovskite structural body.

Furthermore, another object of the present invention is to provide a method for forming a La-doped Ti-based perovskite structural body by wet-infiltrating an aqueous solution composition for synthesizing a La-doped Ti-based perovskite structural body into a fuel electrode of a solid oxide fuel cell.

On the other hand, other objects of the present invention that are not specified will be further considered within the scope that can be easily derived from the following detailed description and the effects thereof.

In order to achieve the objects proposed above, the following solution means are proposed.

An aqueous solution composition for synthesizing a La-doped Ti-based perovskite structural body according to an exemplary embodiment of the present invention includes at least one selected from the group consisting of a Ba precursor, a Sr precursor, and a Ca precursor, a La precursor, and a Ti precursor which are dissolved in an aqueous solution, wherein the aqueous solution further includes citric acid.

In the exemplary embodiment, the aqueous solution may further include citric acid.

In the exemplary embodiment, in the aqueous solution, TiO₂ powder may not be formed.

In the exemplary embodiment, in the aqueous solution, a Ni precursor may be further included and dissolved.

A method for preparing an aqueous solution composition for synthesizing a La-doped Ti-based perovskite structural body according to another embodiment of the present invention includes (a) mixing at least one selected from the group consisting of a Ba precursor, a Sr precursor, and a Ca precursor, and a La precursor in water to prepare a first solution, (b) mixing citric acid and ethylene glycol with the first solution to prepare a second solution, and (c) adding titanium(IV) isopropoxide drop by drop to the second solution, followed by stirring and dissolving the same to prepare an aqueous solution composition for synthesizing a La-doped Ti-based perovskite structural body.

In another exemplary embodiment, in the first solution, a Ni precursor may be further included and dissolved.

In another exemplary embodiment, the step (c) above may be performed at a temperature of 70 °C to 90 °C.

A direct ammonia solid oxide fuel cell according to yet another embodiment of the present invention includes a fuel electrode, a stack, and an air electrode, wherein the fuel electrode includes La-doped Ti-based perovskite particles, which are formed inside the fuel electrode by infiltration.

In yet another exemplary embodiment, the La-doped Ti-based perovskite particles are formed by wet-infiltrating the above-described aqueous solution composition by ultrasonic spray into a fuel electrode, followed by drying, burning, and firing the same.

A method for manufacturing a direct ammonia solid oxide fuel cell according to still another exemplary embodiment of the present invention includes (a) mixing at least one selected from the group consisting of a Ba precursor, a Sr precursor, and a Ca precursor, and a La precursor in water to prepare a first solution, (b) mixing citric acid and ethylene glycol with the first solution to prepare a second solution, (c) adding titanium(IV) isopropoxide drop by drop to the second solution, followed by stirring and dissolving the same to prepare an aqueous solution composition for synthesizing La-doped Ti-based perovskite particles, (d) ultrasonic-spraying the aqueous solution composition onto a fuel electrode of a direct ammonia solid fuel cell to wet-infiltrate the aqueous solution composition into the fuel electrode, and (e) drying, burning, and firing the direct ammonia solid oxide fuel cell to form La-doped Ti-based perovskite particles inside the fuel electrode.

### BRIEF DESCRIPTION OF THE DRAWINGS

Exemplary embodiments can be understood in more detail from the following description taken in conjunction with the accompanying drawings, in which:
FIG. 1 is a schematic flow chart of a method for preparing an aqueous solution composition for synthesizing a La-doped Ti-based perovskite structural body according to an embodiment of the present invention;
FIG. 2 shows a comparison of XRD measurement results of a La-doped Ti-based perovskite structural body, which is prepared using a composition prepared by a sol-gel method, and a La-doped Ti-based perovskite structural body, which is prepared using the aqueous solution composition according to the embodiment of the present invention;
FIG. 3 is a schematic diagram for explaining wet-infiltration of a La-doped Ti-based perovskite structural body aqueous solution into a fuel electrode of an SOFC by using the aqueous solution composition for synthesizing a La-doped Ti-based perovskite structural body according to the embodiment of the present invention;
FIG. 4 shows SEM images before and after forming a La-doped Ti-based perovskite structural body through wet-infiltration into a Ni-YSZ fuel electrode support layer of an SOFC;
FIG. 5 shows the result of ultra spray wet-infiltrating an aqueous solution composition for synthesizing a La-doped Ti-based perovskite structural body on GDC scaffold, and then heat-treating the same to form a La-doped Ti-based perovskite structural body on the GDC scaffold, and confirming the formation of the La-doped Ti-based perovskite structural body through XRD analysis;
FIG. 6 shows the result of ultra spray wet-infiltrating an aqueous solution composition for synthesizing a La-doped Ti-based perovskite structural body on a fuel electrode of a commercially available fuel electrode-supported SOFC large-area cell, and then heat-treating the same to form a La-doped Ti-based perovskite structural body inside the fuel electrode, and confirming the formation of the La-doped Ti-based perovskite structural body through SEM analysis;
FIG. 7 shows the result of measuring a voltage change according to a current density of the commercially available fuel electrode-supported SOFC large-area cell having the La-doped Ti-based perovskite structural body formed in the fuel electrode manufactured in FIG. 6;
FIG. 8 shows the result of measuring a power density according to a temperature of the commercially available fuel electrode-supported SOFC large-area cell having the La-doped Ti-based perovskite structural body formed in the fuel electrode manufactured in FIG. 6;
FIG. 9 shows the result of measuring durability of the commercially available fuel electrode-supported SOFC large-area cell having the La-doped Ti-based perovskite structural body formed in the fuel electrode manufactured in FIG. 6;
FIG. 10 is a SEM image of the surface of the fuel electrode after the durability test of FIG. 9;
FIG. 11 shows the result of evaluating the ammonia decomposition ability of LCTN, LSTN, and LBTN;
FIG. 12 is a schematic diagram illustrating the elution of nickel nano metal particles in a reducing atmosphere according to the operation of an SOFC if a La-doped Ti-based perovskite structural body is at least one of LCTN, LSTN, and LBTN;
FIG. 13 shows the result of confirming, using XRD, the formation of nickel nano metal particles by a reduction process; and
FIG. 14 and FIG. 15 show the results of confirming, by TEM, the formation of the nickel nano metal particles by the reduction process.

The accompanying drawings are exemplified by reference for an understanding of the technical idea of the present invention, and the scope of the present invention is not limited thereto.

### DETAILED DESCRIPTION OF EMBODIMENTS

Hereinafter, with reference to the drawings, the configuration of the present invention guided by various embodiments of the present invention, and effects resulting from the configuration will be described. In describing the present invention, detailed descriptions of related known functions will be omitted when it is determined that the detailed descriptions may unnecessarily obscure the gist of the present invention that is apparent to those skilled in the art.

A La-doped Ti-based perovskite structural body, that is, lanthanum strontium titanate (LST), lanthanum barium titanate (LBT), lanthanum calcium titanate (LCT), lanthanum strontium titanium niobate (LSTN), lanthanum barium titanium nickel (LBTN), lanthanum calcium titanium niobate (LCTN), and the like are ceramic materials having a perovskite structure.

The perovskite structure has a crystal structure in the form of ABO₃, wherein A and B refer to cations having different sizes, respectively. The basic structure of the La-doped Ti-based perovskite structural body is that strontium, barium, or calcium is located at site A, and titanium is located at site B. The LST, LBT, or LCT is partially deficient at the site A, and instead, is doped with lanthanum. Furthermore, the LSTN, LBTN, or LCTN is substituted with nickel, instead of titanium of the site B.

Titanium(IV) isopropoxide used in the synthesis of the La-doped Ti-based perovskite structural body described above reacts with water to synthesize TiO₂.

### [Reaction Equation 1]

Therefore, typically, it has been practically impossible to use an aqueous solution-based composition to synthesize a La-doped Ti-based perovskite structural body, and thus, an anhydrous sol-gel composition has been used.

Since wet spraying by ultrasonic spraying is impossible with such a sol-gel composition, it is difficult to infiltrate and form a La-doped Ti-based perovskite structural body into a fuel electrode of a solid oxide fuel cell (SOFC), and a separate ammonia decomposition layer has to be formed.

However, even though the aqueous solution composition for synthesizing a La-doped Ti-based perovskite structural body according to an embodiment of the present invention is aqueous solution-based, Ti is completely dissolved in the aqueous solution.

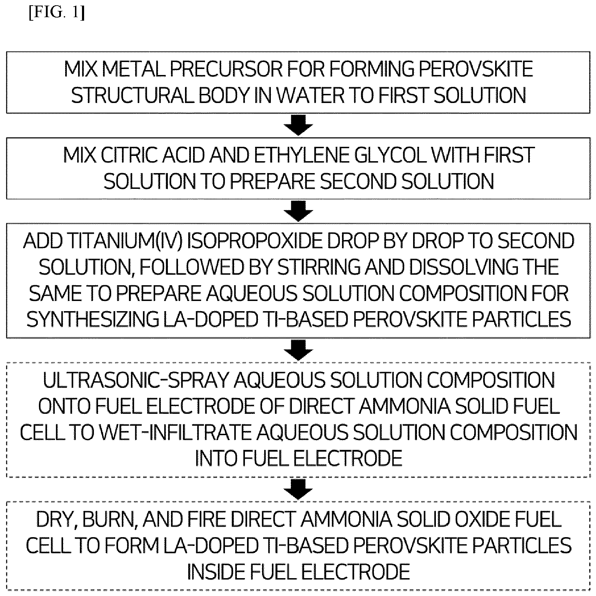

FIG. 1 is a schematic flow chart of a method for preparing an aqueous solution composition for synthesizing a La-doped Ti-based perovskite structural body according to an embodiment of the present invention.

First, in order to prepare the aqueous solution composition of the present invention, materials as shown in Table 1 and Table 2 below are prepared.

**[Table 1]**

| | Example 1 | Example 2 | Example 3 | Example 4 |
|---|---|---|---|---|
| | LST | LSTN_{0.10} | LBTN_{0.10} | LCTN_{0.10} |
| La precursor | 0.4 mol. | 0.4 mol. | 0.4 mol. | 0.4 mol. |
| Sr precursor | 0.4 mol. | 0.4 mol. | - | - |
| Ti precursor | 1.0 mol. | 0.9 mol. | 0.9 mol. | 0.9 mol. |
| Ni precursor | - | 0.10 mol. | 0.10 mol. | 0.10 mol. |
| Ba precursor | - | - | 0.40 mol. | - |
| Ca precursor | - | - | - | 0.40 mol. |
| Ti/Ni | - | 9 | 9 | 9 |
| Citric Acid | 4 mol. | 4 mol. | 4 mol. | 4 mol. |
| Ethylene Glycol | 16 mol. | 16 mol. | 16 mol. | 16 mol. |

La(NO₃)₃ . 6H₂O may be used as the La precursor, Sr(NO₃)₂ may be used as the Sr precursor, Ba(NO₃)₂ may be used as the Ba precursor, Ca(NO₃)₂ may be used as the Ca precursor, Ti[OCH(CH₃)₂]₄ may be used as the Ti precursor, and Ni(NO₃)₂ . 6H₂O may be used as the Ni precursor.

First, a step of mixing at least one selected from the group consisting of the Ba precursor, the Sr precursor, and the Ca precursor, and the La precursor in water to prepare a first solution is performed. If LSTN, LBTN, or LCTN is prepared, the first solution may further include a Ni precursor. Here, distilled water may be used as the water, and 100 mL of water was used based on the compositions of Examples 1 to 4.

Next, citric acid and ethylene glycol are mixed with the first solution to prepare a second solution. After the citric acid and the ethylene glycol are added, the mixture is stirred to completely dissolve the same at room temperature.

After all the materials are dissolved in the second solution, titanium(IV) isopropoxide is added thereto drop by drop, and the mixture is slowly stirred at a temperature of 70 °C to 90 °C to dissolve the titanium(IV) isopropoxide for 12 hours so as to prepare a third solution. The third solution is the aqueous solution composition of the present invention. Meanwhile, the present process was performed at a temperature of 80 °C.

As seen in [Reaction Equation 1], since titanium(IV) isopropoxide reacts with water and forms TiO₂, it is not possible to use an aqueous solution-based composition to synthesize a La-doped Ti-based perovskite structural body, and a sol-gel-based composition is used. In the aqueous solution composition of the present invention, titanium(IV) isopropoxide was added drop by drop to the second solution containing citric acid at a temperature of 70 °C to 90 °C, and slowly stirred, so that Ti was completely dissolved without forming TiO₂. On the other hand, under the same aqueous solution condition without citric acid, TiO₂ powder was formed.

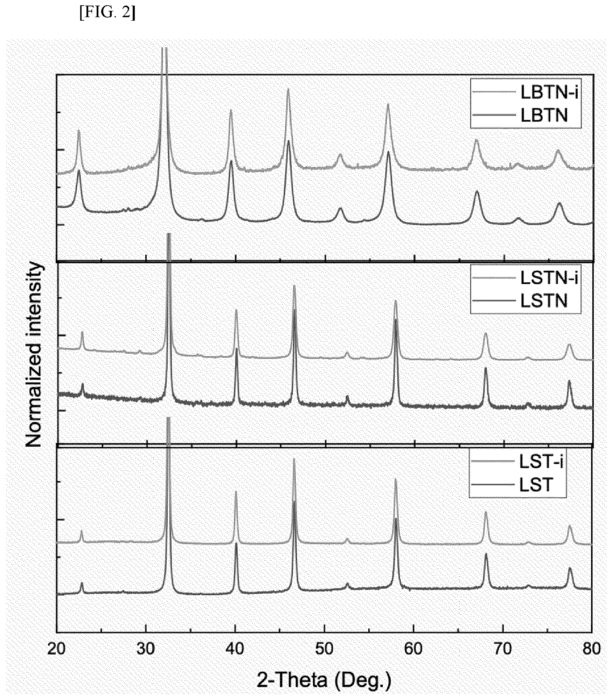

FIG. 2 shows a comparison of XRD measurement results of a La-doped Ti-based perovskite structural body, which is prepared using a composition prepared by a sol-gel method, and a La-doped Ti-based perovskite structural body, which is prepared using the aqueous solution composition according to the embodiment of the present invention.

For comparison, sol-gel-based compositions and aqueous solution-based compositions were prepared with the compositions of Example 1, Example 2, and Example 3.

The sol-gel-based composition was dried at 250 °C for 2 hours, then burned in air at 400 °C for 2 hours, and fired in air at 900 °C for 12 hours to prepare La-doped Ti-based perovskite structural bodies (LST, LSTN, and LBTN).

The aqueous solution-based composition was completely dried at 120 °C, then burned in air at 400 °C for 2 hours, and fired in air at 900 °C for 12 hours to prepare La-doped Ti-based perovskite structural bodies (LST-i, LSTN-i, and LBTN-i).

As shown in FIG. 2, the XRD analysis results showed no difference in crystal structure between the results of using the sol-gel-based compositions and the results of using the aqueous solution-based compositions. Moreover, when the aqueous solution-based compositions were used, it was possible to synthesize La-doped Ti-based perovskite structural bodies faster than when the sol-gel-based compositions were used. In addition, as shown in FIG. 2, it is possible to synthesize Ba-based perovskite structural bodies as well as Sr-based perovskite structural bodies. On the other hand, although not shown in FIG. 2, Ca-based perovskite structural bodies also exhibited no difference in crystal structure between using the aqueous solution-based compositions and the sol-gel-based compositions. This indicates that, like Sr- and Ba-based perovskite structural bodies, Ca-based perovskite structural bodies can also be stably synthesized using the aqueous solution-based compositions. Since it is possible to synthesize a La-doped Ti-based perovskite structural body using the aqueous solution-based composition, it is possible to use the aqueous solution-based composition in an ultrasonic spray wet infiltration process.

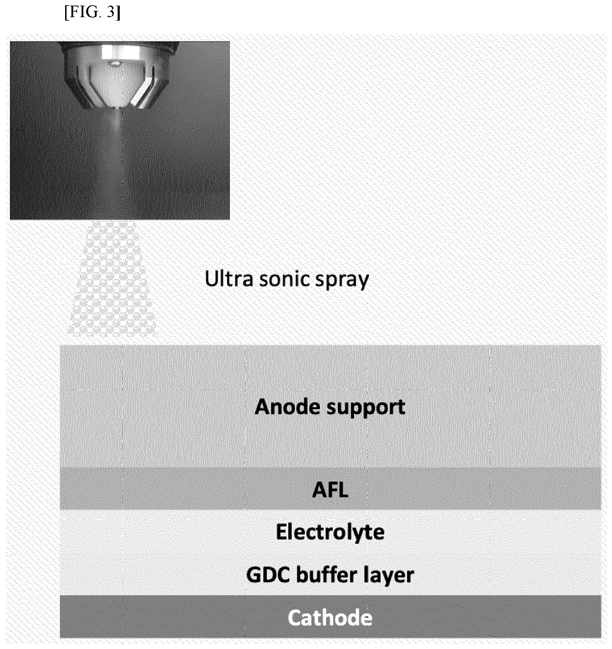

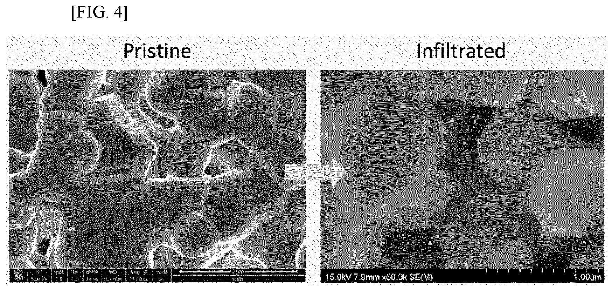

FIG. 3 is a schematic diagram for explaining wet-infiltration of a La-doped Ti-based perovskite structural body aqueous solution into a fuel electrode of an SOFC by using the aqueous solution composition for synthesizing a La-doped Ti-based perovskite structural body according to the embodiment of the present invention, and FIG. 4 shows SEM images before and after forming a La-doped Ti-based perovskite structural body through wet-infiltration into a Ni-YSZ fuel electrode support layer of an SOFC.

An aqueous solution composition was prepared with the composition of Example 2, and as shown in FIG. 3, the prepared aqueous solution composition was ultrasonic-sprayed onto a fuel electrode (anode) of an SOFC. Due to the ultrasonic spraying, the aqueous solution composition infiltrates in the form of microscopic droplets into the fuel electrode (anode). After the ultrasonic spray wet infiltration process is completed, the composition is completely dried at 120 °C, then burned in air at 400 °C for 10 minutes, and fired in air at 900 °C for 12 hours to form a La-doped Ti-based perovskite structural body.

As a result, as shown in FIG. 4, it can be confirmed that nano-sized LSTN infiltration particles are uniformly formed even on the inner surfaces of pores of a Ni-YSZ fuel electrode support layer.

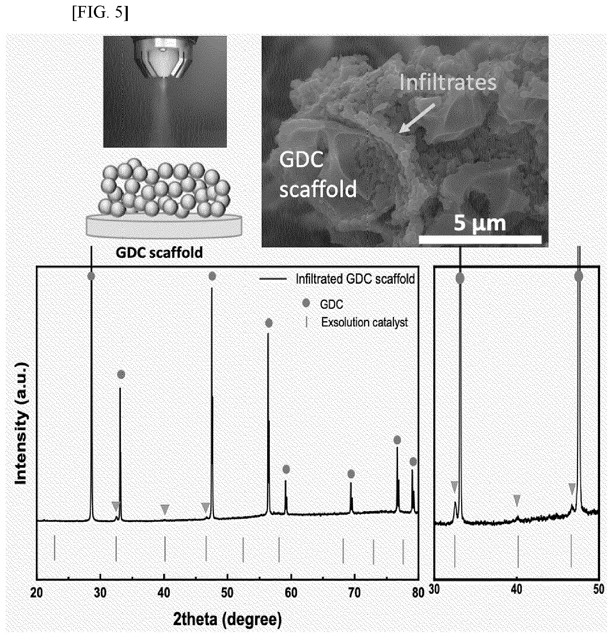

FIG. 5 shows the result of ultra spray wet-infiltrating an aqueous solution composition for synthesizing a La-doped Ti-based perovskite structural body on GDC scaffold, and then heat-treating the same to form a La-doped Ti-based perovskite structural body on the GDC scaffold, and confirming the formation of the La-doped Ti-based perovskite structural body through XRD analysis.

As shown in FIG. 5, the aqueous solution composition prepared with the composition of Example 2 was infiltrated into the GDC scaffold by using the ultrasonic spray wet infiltration process to form a La-doped Ti-based perovskite structural body.

As can be seen in the upper right image of FIG. 5, it can be confirmed that a nano-sized La-doped Ti-based perovskite structural body is formed on the surface of the GDC scaffold.

In addition, as can be confirmed in the graph located at the bottom of FIG. 5, XRD peaks of the GDC scaffold (infiltrated GDC scaffold) on which the La-doped Ti-based perovskite structural body is formed by infiltration show both XRD peaks of the GDC and XRD peaks of the La-doped Ti-based perovskite structural body (exsolution catalyst). This means that the La-doped Ti-based perovskite structural body is completely formed on the GDC scaffold by the wet infiltration process.

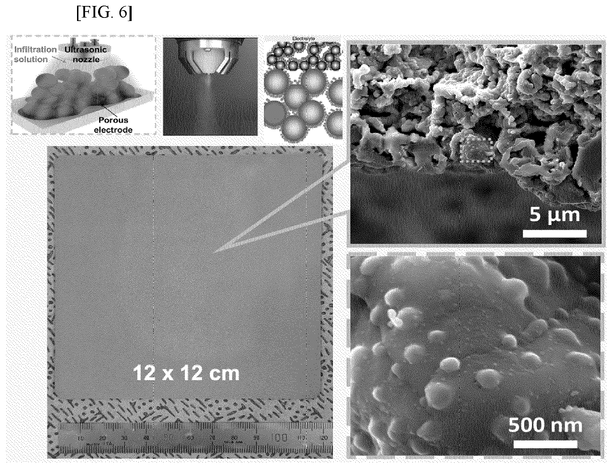

FIG. 6 shows the result of ultra spray wet-infiltrating an aqueous solution composition for synthesizing a La-doped Ti-based perovskite structural body on a fuel electrode of a commercially available fuel electrode-supported SOFC large-area cell, and then heat-treating the same to form a La-doped Ti-based perovskite structural body inside the fuel electrode, and confirming the formation of the La-doped Ti-based perovskite structural body through SEM analysis.

As shown in FIG. 6, the aqueous solution composition prepared with the composition of Example 2 was infiltrated into a fuel electrode of an SOFC large-area cell by using the ultrasonic spray wet infiltration process to form a La-doped Ti-based perovskite structural body.

As shown in FIG. 6, the La-doped Ti-based perovskite structural body is completely formed even on the inner surfaces of pores of a porous electrode.

In the present invention, since ultrasonic spraying is performed using an aqueous solution-based composition, there is an advantage in that it is possible to perform the process quickly and uniformly even for a large-area object to be sprayed.

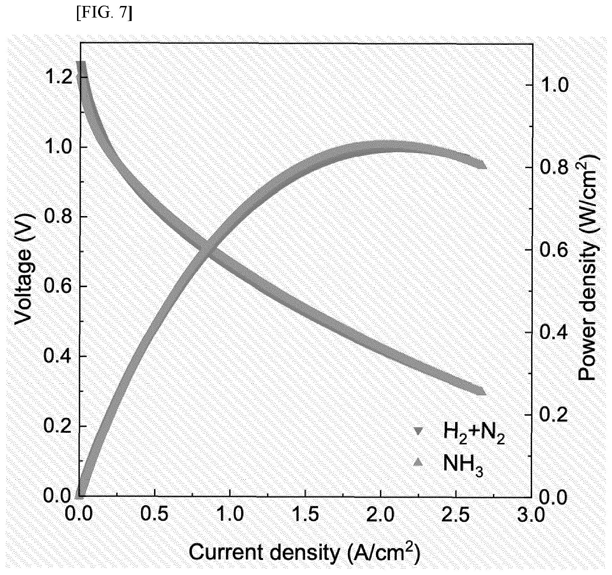

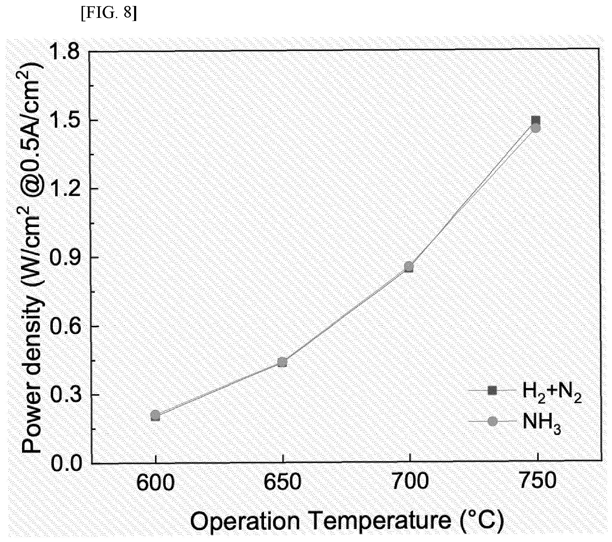

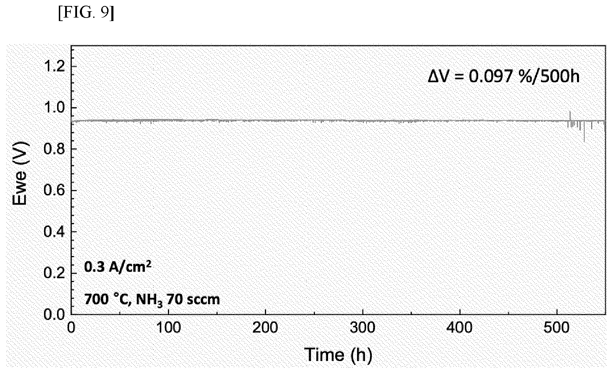

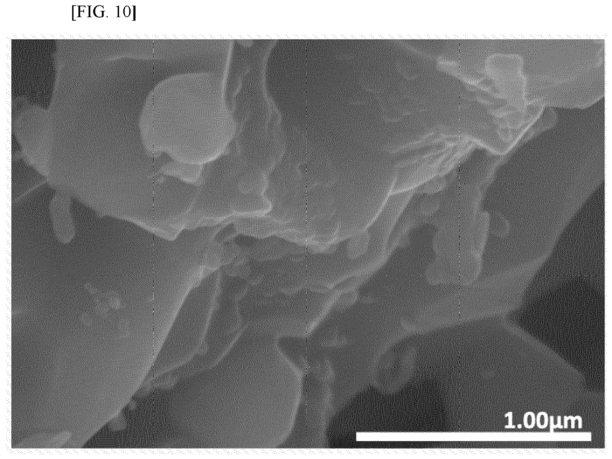

FIG. 7 shows the result of measuring a voltage change according to a current density of the commercially available fuel electrode-supported SOFC large-area cell having the La-doped Ti-based perovskite structural body formed in the fuel electrode manufactured in FIG. 6, FIG. 8 shows the result of measuring a power density according to a temperature of the commercially available fuel electrode-supported SOFC large-area cell having the La-doped Ti-based perovskite structural body formed in the fuel electrode manufactured in FIG. 6, FIG. 9 shows the result of measuring durability of the commercially available fuel electrode-supported SOFC large-area cell having the La-doped Ti-based perovskite structural body formed in the fuel electrode manufactured in FIG. 6, and FIG. 10 is a SEM image of the surface of the fuel electrode after the durability test of FIG. 9.

Even in a typical solid oxide fuel cell, a Ni metal contained in a commercially available fuel electrode material Ni-YSZ cermet serves as an ammonia decomposition catalyst. That is, the typical solid oxide fuel cell operates even under a NH₃ fuel condition. However, the maximum performance is reduced under the NH₃ fuel condition compared to a H₂+N₂ fuel condition, and there is concentration loss due to material transfer resistance in a high current density region. Furthermore, it is known that the deterioration rate is about 2.4% per 100 hours.

However, as shown in FIG. 7, an SOFC including a fuel electrode into which the La-doped Ti-based perovskite structural body was wet-infiltrated showed an equivalent level of performance to a simulation gas (H₂+N₂) even when ammonia was directly used as fuel. In addition, as shown in FIG. 8, the SOFC showed an equivalent level of performance to a simulation gas (H₂+N₂) even when ammonia was directly used fuel even when ammonia was used directly used as fuel within an operation temperature range of the SOFC. Furthermore, as shown in FIG. 9, the result of long-term durability evaluation showed that the SOFC maintained very stable performance for about 500 hours.

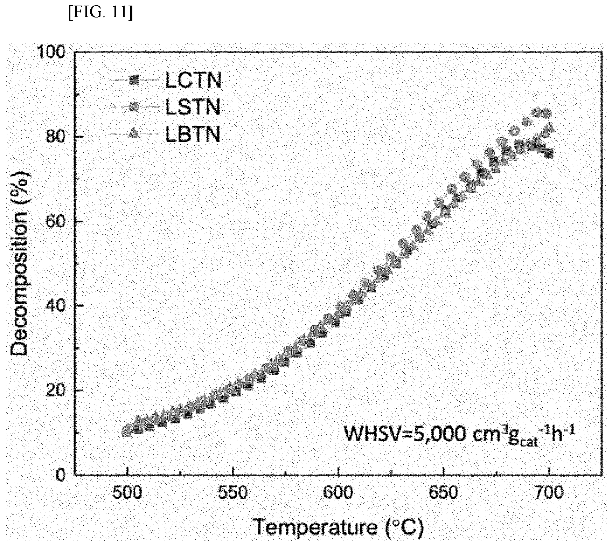

FIG. 11 shows the result of evaluating the ammonia decomposition ability of LCTN, LSTN, and LBTN. As described above, an SOFC including a fuel electrode into which LSTN (Example 2) was wet-infiltrated showed an equivalent level of performance to a simulation gas (a mixture hydrogen and nitrogen) even when ammonia was directly used as fuel, and had an effect of maintaining stable performance for about 500 hours even when evaluated for long-term durability. However, as shown in FIG. 11, since LBTN (Example 3) and LCTN (Example 4) also show ammonia decomposition performance similar to that of LSTN, it is clear that SOFCs, which have fuel electrodes into which LBTN (Example 3) and LCTN (Example 4) are respectively infiltrated, will also show an equivalent level of performance to a simulation gas (a mixture of hydrogen and nitrogen) even when ammonia is directly used as fuel, and will have an effect of maintaining stable performance for about 500 hours when evaluated for long-term durability.

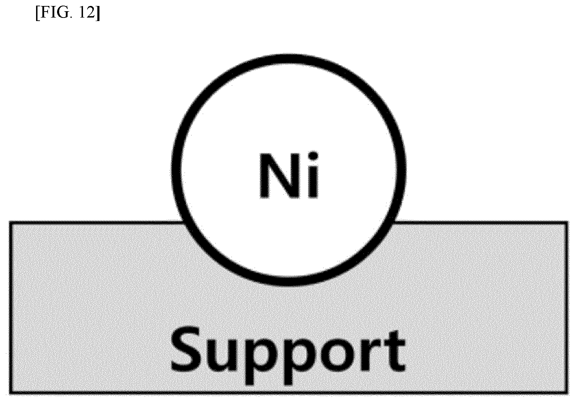

On the other hand, during the operation of the SOFC, which includes the fuel electrode into which the La-doped perovskite structural body of the present invention has been infiltrated, the fuel electrode becomes a reducing atmosphere. If the La-doped Ti-based perovskite structural body is at least one of LCTN, LSTN, and LBTN, nickel nano metal particles are exsolved in the reducing atmosphere according to the operation of the SOFC. When the nickel nano metal particles are exsolved, some of the nickel nano metal particles are embedded in a substrate as shown in FIG. 12. Since the nickel nano metal particles are partially embedded in the substrate, the adhesion of the nickel nano metal particles to the substrate is improved, and accordingly, the durability of the SOFC is improved.

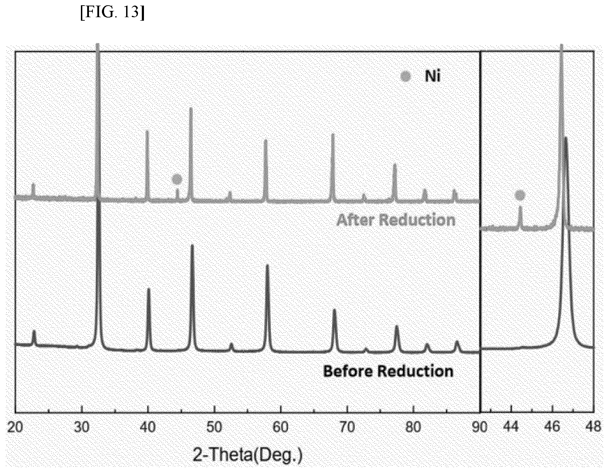

FIG. 13 shows the result of confirming, using XRD, the formation of nickel nano metal particles by a reduction process. Referring to FIG. 13, after the reduction process, a peak for a nickel metal appears, which means that the particles exsolved and formed by the reduction process are nickel metal particles.

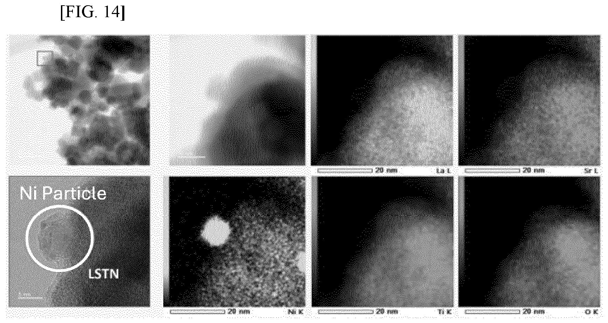

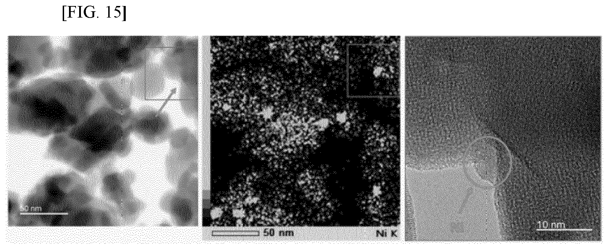

FIG. 14 and FIG. 15 show the results of confirming, by TEM, the formation of the nickel nano metal particles by the reduction process. In addition, as shown in FIG. 14 and FIG. 15, it can be also confirmed the formation of the nickel nano metal particles by TEM. Furthermore, as described above, it can be confirmed that nickel metal nanoparticles exsolved and formed are partially embedded in a catalyst substrate. In addition, it can be seen that the formed nickel metal nanoparticles are uniformly dispersed and formed.

Titanium(IV) isopropoxide used for the synthesis of a La-doped Ti-based perovskite structural body reacts with water to synthesize TiO₂, and typically, an anhydrous sol-gel method has been used to synthesize a La-doped Ti-based perovskite structural body.

On the other hand, an aqueous solution composition for synthesizing a La-doped Ti-based perovskite structural body according to an embodiment of the present invention is advantageous in that even though the composition is aqueous solution-based, Ti is completely dissolved in the aqueous solution.

Accordingly, it is possible to form a La-doped Ti-based perovskite structural body by wet-infiltrating the aqueous solution composition according to an embodiment of the present invention into a fuel electrode of an SOFC.

The SOFC including the fuel electrode into which the La-doped Ti-based perovskite structural body is wet-infiltrated shows an equivalent level of performance to a simulation gas (a mixture hydrogen and nitrogen) even when ammonia is directly used as fuel, and has an effect of maintaining stable performance for about 500 hours even when evaluated for long-term durability.

Although not explicitly stated herein, it should be understood that effects described in the following specification that are expected by the technical features of the present invention and their provisional effects are treated as described in the specification of the present invention.

The scope of protection of the present invention is not limited to the descriptions and expressions of the embodiments explicitly described above. In addition, it should be added once again that the scope of protection of the present invention may not be limited due to obvious changes or substitutions in the technical field to which the present invention pertains.

## Claims

1. An aqueous solution composition for synthesizing a La-doped Ti-based perovskite structural body, wherein at least one selected from the group consisting of a Ba precursor, a Sr precursor, and a Ca precursor, a La precursor, and a Ti precursor are dissolved in an aqueous solution, wherein the aqueous solution further includes citric acid.

2. The aqueous solution composition of claim 1, wherein in the aqueous solution, TiO₂ powder is not formed.

3. The aqueous solution composition of claim 1, wherein in the aqueous solution, a Ni precursor is further included and dissolved.

4. A method for preparing an aqueous solution composition for synthesizing a La-doped Ti-based perovskite structural body, the method comprising:
(a) mixing at least one selected from the group consisting of a Ba precursor, a Sr precursor, and a Ca precursor, and a La precursor in water to prepare a first solution;
(b) mixing citric acid and ethylene glycol with the first solution to prepare a second solution; and
(c) adding titanium(IV) isopropoxide drop by drop to the second solution, followed by stirring and dissolving the same to prepare an aqueous solution composition for synthesizing a La-doped Ti-based perovskite structural body.

5. The method of claim 4, wherein in the first solution, a Ni precursor is further included and dissolved.

6. The method of claim 4, wherein the step (c) above is performed at a temperature of 70 °C to 90 °C.

7. A direct ammonia solid oxide fuel cell comprising a fuel electrode, an electrolyte, and an air electrode, wherein the fuel electrode includes La-doped Ti-based perovskite particles, which are formed inside the fuel electrode by infiltration.

8. The direct ammonia solid oxide fuel cell of claim 7, wherein the La-doped Ti-based perovskite particles are formed by wet-infiltrating the aqueous solution composition of any one of claims 1 to 3 by ultrasonic spray into a fuel electrode, followed by drying, burning, and firing the same.

9. A method for manufacturing a direct ammonia solid oxide fuel cell, the method comprising:
(a) mixing at least one selected from the group consisting of a Ba precursor, a Sr precursor, and a Ca precursor, and a La precursor in water to prepare a first solution;
(b) mixing citric acid and ethylene glycol with the first solution to prepare a second solution;
(c) adding titanium(IV) isopropoxide drop by drop to the second solution, followed by stirring and dissolving the same to prepare an aqueous solution composition for synthesizing La-doped Ti-based perovskite particles;
(d) ultrasonic-spraying the aqueous solution composition onto a fuel electrode of a direct ammonia solid fuel cell to wet-infiltrate the aqueous solution composition into the fuel electrode; and
(e) drying, burning, and firing the direct ammonia solid oxide fuel cell to form La-doped Ti-based perovskite particles inside the fuel electrode.
